# EUROPÄISCHE PATENTANMELDUNG

(11) **EP 1 936 797 A2**
(43) Veröffentlichungstag der Anmeldung: **25.06.2008**
(21) Anmeldenummer: 07122572.6
(22) Anmeldetag: 07.12.2007
(51) Int. Cl.: H02P 6/08

(54) **Vorrichtung zum Verstellen eines Stellgliedes**

(30) Priorität: 22.12.2006 DE 102006061323
(71) Anmelder: VDO Automotive AG, 93055 Regensburg (DE)
(72) Erfinder: Schüssler, Fridtjof, 65510, Idstein/Wörsdorf (DE); Jansen, Werner, 63486, Bruchkoebel (DE)

(57) **Zusammenfassung**

Die Erfindung betrifft eine Vorrichtung zum Verstellen eines Stellgliedes in einem Kraftfahrzeug, die nach dem Pulse-Count-Verfahren arbeitet. Ein Gleichstrommotor (M) steht mit einem Stellglied (K) in Wirkverbindung. Der Gleichstrommotor (M) ist mit einer Ansteuerschaltung, die elektronische Schaltelemente (H1 bis H4) in H-Brückenschaltung enthält, verbunden. Der Motorstrom des Gleichstrommotors (M) wird über ein induktives Bauelement (L) geführt. Am induktiven Bauelement (L) wird ein Spannungssignal abgegriffen und einer Auswerteeinheit zugeführt. Durch Zählen von auftretenden Pulsen im diesem Signal wird die Zahl der Motorumdrehungen und damit die Klappenstellung bestimmt. Wird das induktive Bauelement schaltungstechnisch in Reihenschaltung mit dem Gleichstrommotor zwischen dem Gleichstrommotor und der Ansteuerschaltung angeordnet, so ergibt sich eine besonders hohe Störfestigkeit mit Eignung für den Einsatz im Kraftfahrzeug.

## Beschreibung

Die Erfindung betrifft eine Vorrichtung zum Verstellen eines Stellgliedes in einem Kraftfahrzeug.

Bei Vorrichtungen zum elektrischen Verstellen eines Stellgliedes in einem Kraftfahrzeug erfolgt der Antrieb des Stellgliedes durch einen in geeigneter Weise angesteuerten Gleichstrommotor. Die Ansteuerung des Gleichstrommotors erfolgt so, dass eine gewünschte Stellposition des Stellgliedes eingestellt wird.

Die Position des Stellgliedes kann mittels Sensoren oder aus der Drehbewegung des Gleichstrommotors bestimmt werden.

Aus der US 6,437,533 B1 ist eine Vorrichtung zum Verstellen eines Stellgliedes in einem Kraftfahrzeug mit einem mit dem Stellglied in Wirkverbindung stehenden Gleichstrommotor bekannt. Der Gleichstrommotor ist mit einer Ansteuerschaltung verbunden, die elektronische Schaltelemente in H-Brückenschaltung enthält. Weiterhin enthält die Vorrichtung ein induktives Bauelement, das über die Ansteuerschaltung mit dem Motor verbunden ist, sodass der Motorstrom des Gleichstrommotors über das induktive Bauelement geführt wird. An dem induktiven Bauelement wird ein Spannungssignal abgegriffen, das einer Auswerteeinheit zur Bestimmung der Motorumdrehungen und damit indirekt zur Bestimmung einer Stellung des Stellgliedes zugeführt wird. Das an dem induktiven Bauelement abgegriffene Spannungssignal weist ein charakteristisches Bild mit periodisch auftretenden Pulsen (Spitzen) auf. Diese Pulse sind bedingt durch die Bauart derartiger Gleichstrommotoren und können als Maß für die Anzahl der Motorumdrehungen verwendet werden. Durch Zählen dieser Pulse kann somit über die Zahl der Motorumdrehungen auch auf die Verstellung des Stellgliedes geschlossen werden, beziehungsweise eine vorgegebene Stellungsänderung des Stellgliedes direkt als zu zählende Pulse angegeben werden. Dieses auch als "Pulse-Count" bezeichnete Verfahren ist in der US 6,437,533 B1 näher beschrieben.

Aufgabe der Erfindung ist es, eine Vorrichtung zum Verstellen eines Stellgliedes in einem Kraftfahrzeug, wie sie grundsätzlich aus der US 6,437,533 B1 bekannt ist, so weiter zu entwickeln, dass sie robust ist gegenüber den in einem Kraftfahrzeug üblicherweise auftretenden Störeinflüssen.

Die Aufgabe wird gelöst durch eine Vorrichtung mit den Merkmalen des Anspruchs 1.

Die Vorrichtung zum Verstellen eines Stellgliedes in einem Kraftfahrzeug weist einen mit dem Stellglied in Wirkverbindung stehenden Gleichstrommotor auf, sowie weiterhin eine mit dem Gleichstrommotor verbundene Ansteuerschaltung, die elektronische Schaltelemente in H-Brückenschaltung enthält, ein induktives Bauelement, über das der Motorstrom des Gleichstrommotors geführt wird und an dem ein Spannungssignal abgegriffen wird, eine mit dem induktiven Bauelement verbundene Auswerteeinheit zur Bestimmung einer Stellung des Stellgliedes mit dem an dem induktiven Bauelement abgegriffenen Spannungssignal, wobei die Induktivität schaltungstechnisch in Reihenschaltung mit dem Gleichstrommotor zwischen dem Gleichstrommotor und der Ansteuerschaltung angeordnet ist.

Bei der aus der US 6,437,533 B1 bekannten Vorrichtung ist das induktive Bauelement mit der H-Brückenschaltung und Masse verbunden. Es hat sich gezeigt, dass diese Anordnung im Kraftfahrzeugeinsatz relativ störempfindlich ist. Bei der erfindungsgemäßen Ausgestaltung ist das induktive Bauelement dagegen schaltungstechnisch in Reihenschaltung mit dem Gleichstrommotor zwischen dem Gleichstrommotor und der Ansteuerschaltung angeordnet. In beiden Fällen fließt somit der Motorstrom über das induktive Bauelement, jedoch hat sich gezeigt, dass die erfindungsgemäße Ausgestaltung wesentlich robuster ist gegenüber den in einem Kraftfahrzeug auftretenden Störeinflüssen.

Während bei der bekannten Vorrichtung der Motorstrom stets in der gleichen Richtung durch das induktive Bauelement fließt, fließt der Motorstrom bei der erfindungsgemäßen Ausgestaltung je nach Schaltzustand der H-Brücke in unterschiedliche Richtungen durch das induktive Bauelement.

Wird das Spannungssignal an einem schaltungstechnisch dem Gleichstrommotor zugewandten Anschlusspunkt des induktiven Bauelementes abgegriffen und einer Auswerteeinheit zugeführt, so ergibt sich eine besonders einfache und vorteilhafte Ausgestaltung der Schaltung. Weist die Auswerteeinheit eine Teileinheit zur Erkennung, Filterung und Konditionierung des Spannungssignals auf, so können einem die Auswertung nach dem Pulse-Count-Verfahren übernehmenden Controller stets gleichartige und gut verarbeitbare Signalformen zugeführt werden, so dass Auswertefehler vermieden werden.

Ist der Gleichstrommotor mit einem kapazitiven Netzwerk zur Unterdrückung von Störspannungen verbunden, so können Störspannungen, die typischerweise im Bordnetz eines Kraftfahrzeuges auftreten, besonders effektiv unterdrückt werden. Auch hierdurch werden die Signalauswertung und die Robustheit der Vorrichtung gefördert. Das kapazitive Netzwerk kann mindestens einen parallel zu dem Gleichstrommotor geschalteten Kondensator zur Unterdrückung niederfrequenter Störungen und mindestens einen weiteren Kondensator zur Unterdrückung von hochfrequenten Störspannungen enthalten.

Ist das Stellglied eine Klappe zur Steuerung oder Regelung einer Luftführung in einem Luftkanal eines Heizungs- und/oder Klimatisierungssystems eines Kraftfahrzeuges, so kann die gezielte Verstellung einer derartigen Klappe besonders einfach und zuverlässig realisiert werden.

Die Vorrichtung und deren Funktionsweise werden nachfolgend anhand der Zeichnung näher beschrieben. Es zeigen:
- Figur 1: ein elektrisches Schaltbild des Motors und dessen Ansteuerung,
- Figur 2: eine schematische Darstellung des Motoraufbaus sowie des Motorstromes,
- Figur 3: typische Signalformen,
- Figur 4: die Anwendung einer erfindungsgemäßen Vorrichtung in einem Klimatisierungssystem.

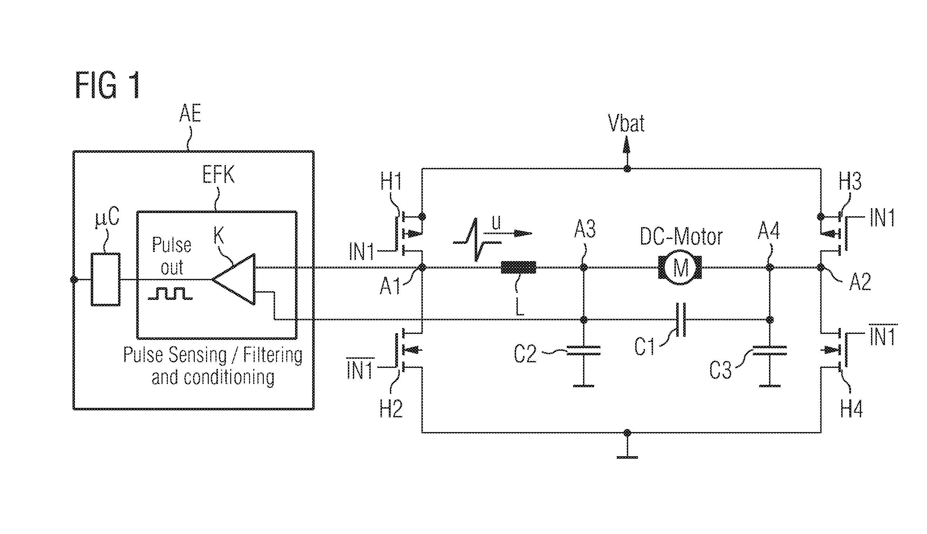

Figur 1 zeigt eine Schaltung der Ansteuerung des Elektromotors M sowie die erfindungsgemäße Anordnung des induktiven Bauelementes L. Die elektronischen Schaltelemente H1 bis H4 sind in H-Brückenschaltung angeordnet und werden von einem Controller (Mikroprozesseinheit) µC über nicht dargestellte Ansteuerleitungen angesteuert. Die Brückenschaltung ist mit einer Batteriespannung V_{Bat} sowie mit Masse verbunden. Die Brückenschaltung ist über Anschlusspunkte A1, A2 mit dem Gleichstrommotor M verbunden. Die elektronischen Schaltelemente H1 bis H4 werden von dem Controller µC in bekannter Weise so geschaltet, dass entweder ein Stromfluss von der Batterie über das elektronische Schaltelement H1, den Gleichstrommotor M und das elektronische Schaltelement H4, oder von der Batterie über das elektronische Schaltelement H3, den Gleichstrommotor M und das elektronische Schaltelement H2 erfolgt. Erfindungsgemäß ist nun das induktive Bauelement L schaltungstechnisch in Reihenschaltung mit dem Gleichstrommotor M zwischen dem Gleichstrommotor M und der Ansteuerschaltung, hier mittels des Anschlusspunktes A1, angeordnet. Somit fließt der gesamte Motorstrom über das induktive Bauelement L, und zwar abhängig von der Ansteuerung der elektronischen Schaltelemente H1 bis H4, entweder zum Motor hin, oder vom Motor weg. In der praktischen Anwendung im Kraftfahrzeug werden die elektronischen Schaltelemente H1 bis H4 sowie auch das induktive Bauelement L insbesondere in einem Steuergerät angeordnet, vorzugsweise auf einer Leiterplatte. Die Verbindung des Steuergeräts zum Gleichstrommotor M kann dann von den Anschlusspunkten A3 und A4 mittels Kabel erfolgen.

Am Anschlusspunkt A3, der mit dem induktiven Bauelement L verbunden ist, wird ein das Nutzsignal enthaltendes Spannungssignal abgegriffen und der Auswerteeinheit AE zugeführt. Die Auswerteeinheit AE weist eine Teileinheit EFK, in der eine Erkennung, Filterung und Konditionierung des abgegriffenen Spannungssignals erfolgt, sowie den Controller µC auf. Die Pulse des abgegriffenen Spannungssignals werden von der Teileinheit EFK insbesondere in Rechteckimpulse umgewandelt.

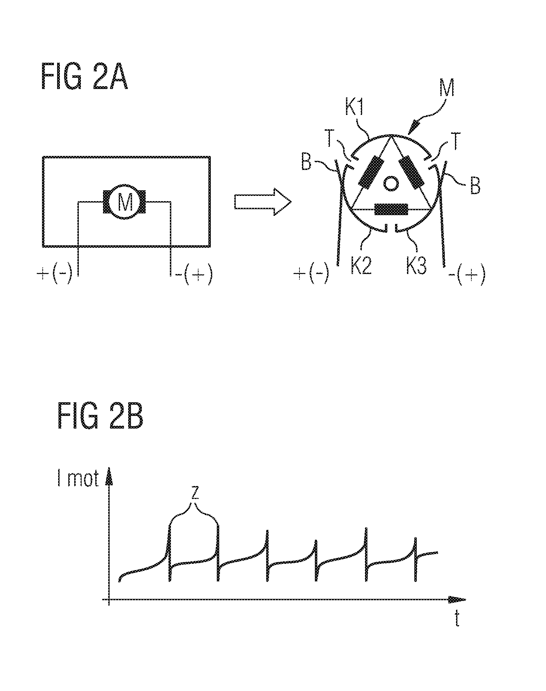

Figur 2a zeigt schematisch den Aufbau des Gleichstrommotors M, der mit einem dreigeteilten Kommutator mit den Lamellen K1 bis K3 sowie mit Metallbürsten B ausgebildet ist. Werden die Trennstellen T zwischen den Lamellen K1 bis K3 an den Metallbürsten B vorbeigeführt, so entsteht kurzzeitig ein Kurzschluss zwischen zwei benachbarten Lamellen, beispielsweise den Lamellen K1 und K3. Hierdurch werden die charakteristische Pulse Z im Stromverlauf hervorgerufen. Der Stromverlauf mit diesen Pulsen Z ist in Figur 2b dargestellt. Bei einer Umdrehung des Gleichstrommotors mit dem dreigeteilten Kommutator entstehen somit sechs Pulse Z. Durch Zählung dieser Pulse Z kann somit die Anzahl der Motorumdrehungen bestimmt werden. Ist der Gleichstrommotor mit einer Stellklappe verbunden, so ist die Motordrehung direkt mit einer Änderung des Stellwinkels der Stellklappe gekoppelt. Über die Zählung der Pulse Z im Motorstrom kann somit auf eine Veränderung der Stellung der Klappe geschlossen werden.

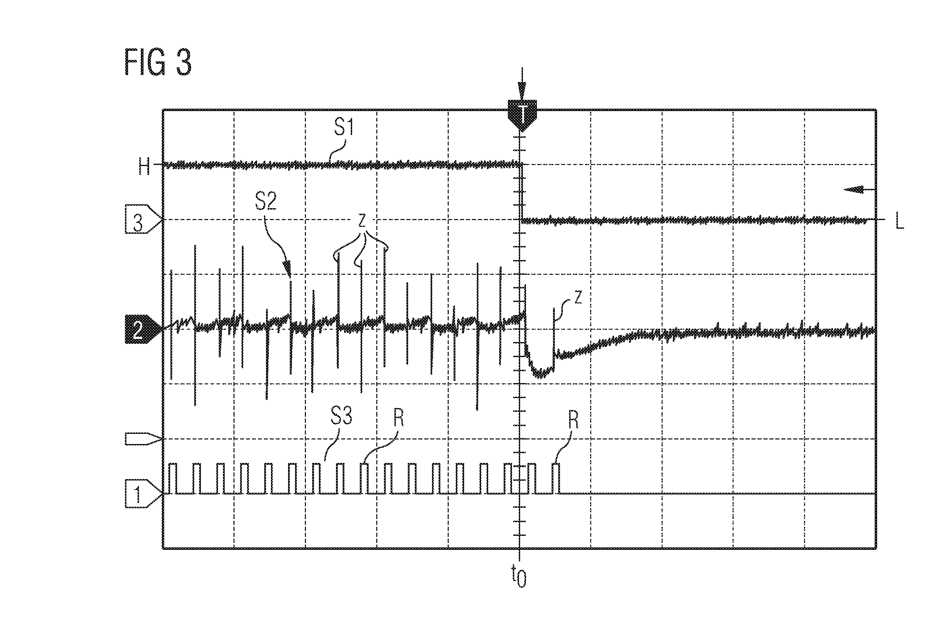

In Figur 3 sind unterschiedliche gemessene Signalverläufe dargestellt. Der obere Signalverlauf S1 zeigt den Einschaltzustand des Gleichstrommotors. Befindet sich das Signal S1 im Zustand H, so ist der Gleichstrommotor eingeschaltet. Befindet sich das Signal S1 im Zustand L, so ist der Gleichstrommotor ausgeschaltet.

Das mittlere Signal S2 zeigt einen gemessenen Motorstromverlauf. Am induktiven Bauelement L wird ein Spannungssignal abgegriffen, das abhängig von der Stromänderung di/dt ist. Dieses Signal wird der Auswerteeinheit, und zwar zunächst der Teileinheit EFK zur Erkennung, Filterung und Konditionierung, zugeführt. Die Teileinheit EFK wandelt das Spannungssignal in das im unteren Bereich von Figur 3 dargestellte Signal S3 um, wobei die Pulse Z des Signals S2 nun als Rechteckimpulse R im Signal S3 vorliegen. Das Signal S3 wird dann dem Controller µC zugeführt, der eine entsprechende Zählung der Rechteckimpulse R vornimmt.

Auch nach Ausschalten des Gleichstrommotors zum Zeitpunkt t0 gemäß Figur 3 läuft dieser aufgrund der Trägheit geringfügig nach. Dieses Nachlaufen hat zur Folge, dass auch das Stellglied noch weiter verstellt wird. Aufgrund der Generatoreigenschaften des gebremsten Motors gibt es dann jedoch auch weiterhin noch einen Stromfluss in dem induktiven Bauelement L und somit auch weitere Pulse Z im Motorstrom mit entsprechenden Rechtecksignalen R im aufbereiteten Signal S3, so dass auch dieses Nachlaufen noch erfasst wird, und die Position der Klappe genau bestimmt werden kann.

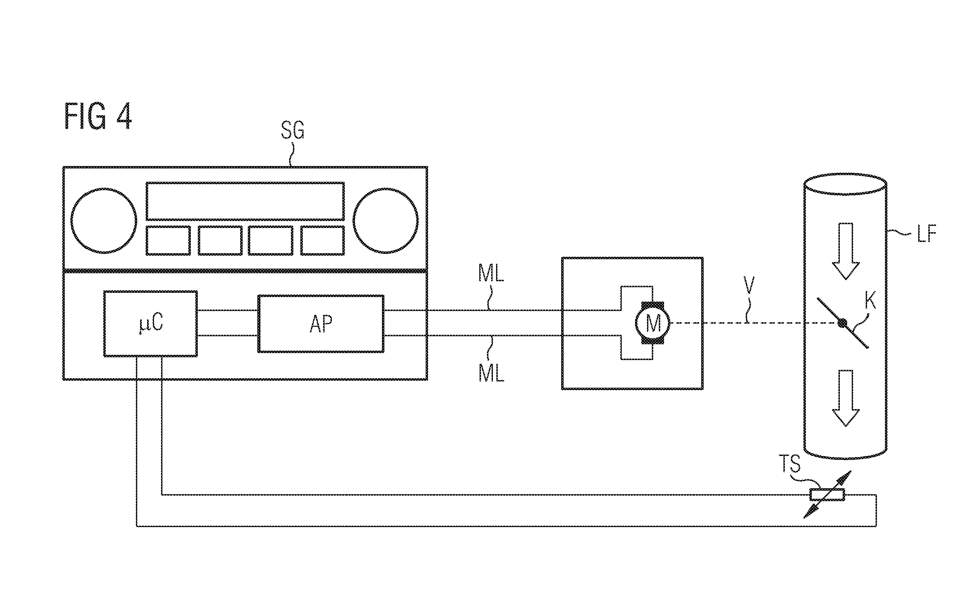

Figur 4 zeigt eine Anwendung der Erfindung zur Einstellung einer Klappe K in einem Luftführungselement (Luftkasten) LF eines Kraftfahrzeugklimatisierungssystems. Das Klimatisierungssystem weist ein Steuergerät SG auf. In dem Steuergerät SG ist der Controller µC sowie die Ansteuerplatine AP mit den elektronischen Schaltern H1 bis H4, dem induktiven Bauelement L und den Kondensatoren C enthalten. Über Motorkabel ML ist das Steuergerät SG mit dem Gleichstrommotor M verbunden. Der Gleichstrommotor M ist über eine mechanische Antriebsverbindung V mit der Klappe K verbunden, wobei die Antriebsverbindung V in der Regel ein Getriebe enthält, so dass eine Vielzahl von Umdrehungen des Gleichstrommotors M zu einer definierten Verstellung der Klappe K führen. In dem Luftführungselement LF, das über die Klappe K zumindest teilweise verschlossen werden kann, ist ein Temperatursensor TS angeordnet, der die Temperatur der Luft im Luftführungselement LF misst. Das Temperatursignal des Temperatursensors TS wird dem Controller µC zugeführt, der daraufhin Steuersignale für den Gleichstrommotor M zum Öffnen oder Schließen der Klappe K bestimmt. Bei rein Kennlinien gesteuerten Klimatisierungssystemen entfällt der Temperatursensor (Ausblasfühler) TS. Die Stellung der Klappe K wird hierbei, wie zuvor näher erläutert, nach dem an sich bekannten Pulse-Count-Verfahren durch Zählung der Pulse Z im Motorstromsignal bestimmt.

## Patentansprüche

1. Vorrichtung zum Verstellen eines Stellgliedes in einem Kraftfahrzeug mit
- einem mit dem Stellglied in Wirkverbindung stehenden Gleichstrommotor (M),
- einer mit dem Gleichstrommotor (M) verbundenen Ansteuerschaltung, die elektronische Schaltelemente (H1 bis H4) in H-Brückenschaltung enthält,
- einem induktiven Bauelement (L), über das der Motorstrom des Gleichstrommotors (M) geführt wird und an dem ein Spannungssignal (S2) abgegriffen wird,
- einer mit dem induktiven Bauelement (L) verbundenen Auswerteeinheit (AE) zur Bestimmung einer Stellung des Stellgliedes mit dem an dem induktiven Bauelement (L1) abgegriffenen Spannungssignals (S2), wobei
- das induktive Bauelement (L) schaltungstechnisch in Reihenschaltung mit dem Gleichstrommotor (M) zwischen dem Gleichstrommotor (M) und der Ansteuerschaltung angeordnet ist.

2. Vorrichtung nach Anspruch 1, **dadurch gekennzeichnet, dass** das Spannungssignal (S2) an einem schaltungstechnisch dem Gleichstrommotor zugewandten Anschlusspunkt (A3) des induktiven Bauelements (L) abgegriffen wird.

3. Vorrichtung nach Anspruch 1 oder 2, **dadurch gekennzeichnet, dass** die Auswerteeinheit (AE) die Stellung des Stellgliedes nach dem Pulse-Count-Verfahren bestimmt.

4. Vorrichtung nach Anspruch 3, **dadurch gekennzeichnet, dass** die Auswerteeinheit (AE) eine Teileinheit (EFK) zur Erkennung, Filterung und Konditionierung des Spannungssignals (S2) enthält

5. Vorrichtung nach einem der vorhergehenden Ansprüche, **dadurch gekennzeichnet , dass** mit dem Gleichstrommotor (M) ein kapazitives Netzwerk (C1 bis C3) zur Unterdrückung von Störspannungen verbunden ist.

6. Vorrichtung nach Anspruch 5, **dadurch gekennzeichnet, dass** das kapazitive Netzwerk mindestens einen parallel zu dem Gleichstrommotor geschalteten Kondensator (C1) zur Unterdrückung niederfrequenter Störspannungen und mindestens einen weiteren Kondensator (C2, C3) zur Unterdrückung von hochfrequenten Störspannungen aufweist.

7. Vorrichtung nach einem der vorhergehenden Ansprüche, **dadurch gekennzeichnet , dass** das Stellglied eine Klappe (K) zur Steuerung oder Regelung einer Luftführung in einem Luftkanal eines Heizungs- und/oder Klimatisierungssystem des Kraftfahrzeugs ist.
